(19) Europäisches Patentamt
European Patent Office
Office européen des brevets

(11) Publication number: **0 139 324 B1**

# (12) EUROPEAN PATENT SPECIFICATION

(45) Date of publication of patent specification: **07.01.88**

(51) Int. Cl.$^4$: **C 04 B 35/26,** C 01 G 49/00

(21) Application number: **84201295.7**

(22) Date of filing: **10.09.84**

## (54) Magnet core of Li-Zn-Mn ferrite.

(30) Priority: **12.09.83 NL 8303143**

(43) Date of publication of application:
**02.05.85 Bulletin 85/18**

(45) Publication of the grant of the patent:
**07.01.88 Bulletin 88/01**

(84) Designated Contracting States:
**DE FR GB NL**

(56) References cited:
**DD-A- 142 182**
**FR-A-2 291 594**
**GB-A-2 019 828**

**CHEMICAL ABSTRACTS, vol. 88, no. 12, March 1978, page 594, no. 82879x, Columbus, Ohio, USA; & JP - A - 77 97000 (TOHOKU METAL INDUSTRIES, LTD.) 15-08-1977**

(73) Proprietor: **N.V. Philips' Gloeilampenfabrieken**
**Groenewoudseweg 1**
**NL-5621 BA Eindhoven (NL)**

(72) Inventor: **Esveldt, Cornelis Jacobus INT. OCTROOIBUREAU B.V.**
**Prof. Holstlaan 6**
**NL-5656 AA Eindhoven (NL)**
Inventor: **Henket, Bernardus Hubertus INT. OCTROOIBUREAU B.V.**
**Prof. Holstlaan 6**
**NL-5656 AA Eindhoven (NL)**
Inventor: **Koppens, Leonardus Josephus INT. OCTROOIBUREAU B.V**
**Prof. Holstlaan 6**
**NL-5656 AA Eindhoven (NL)**

(74) Representative: **Koppen, Jan et al**
**INTERNATIONAAL OCTROOIBUREAU B.V. Prof. Holstlaan 6**
**NL-5656 AA Eindhoven (NL)**

**EP 0 139 324 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a magnet core of oxidic, ferromagnetic material from a spinel ferrite having a cubic crystal structure.

Magnet cores of the above-mentioned type can be used *inter alia* as annular magnet cores of deflection devices for television receivers and as cores of transformers and coils in modern power-supply apparatus. In both types of application the power losses occurring in the ferrite material are decisive to a high extent for the applicability thereof. This obtains still greater force since there is a tendency towards operating deflection coils in television deflection devices at higher and higher frequencies. Normally, Mn—Zn ferrite is used as a core material in the frequency range below 1 MHz. However, this has the disadvantage of an insufficiently high electric resistance, which makes it necessary, especially when coils are wound around the cores, to provide the cores with an electrically insulating layer. In the frequency range above 1 MHz, Ni—Zn ferrite with which a resistivity of the order of $10^5 \Omega$ m can be reached is normally used. The cost-price of Ni—Zn ferrite, however, is very high.

It is the object of the invention to provide a substitute ferrite system which couples a comparatively low cost-price with a sufficiently high electric resistance and low Watt (power) losses.

The invention provides such a ferrite system.

This is characterized by the following composition:

$$(Li_{0.5}\ Fe_{0.5})_{1-z-y}Zn_z\ Mn_y{}^{II}\ Mn_x{}^{III}\ Fe_{2-x+\delta}O_{4+3/2\delta+\varepsilon}$$

with

$0.45 \leqslant z \leqslant 0.62$
$0.01 \leqslant x+y \leqslant 0.20$
$-0.35 \leqslant \delta \leqslant +0.05$
$-0.5\times \leqslant \varepsilon$

to which has been added as a sintering agent.

$p\%$ by weight of $Bi_2O_3 + q\%$ by weight of $V_2O_5$

wherein

$0.1 \leqslant p \leqslant 1.0$
$0.1 \leqslant q \leqslant 1.0$
$p+q \leqslant 1.2$

In addition to a cost-saving of approximately 30% which the use of this ferrite system based on Li-Zn-Mn ferrite provides in a magnet cores, it has proved possible with a correct control of the Fe-content, to realise a resistivity in the order of $10^6 \Omega$ m (the highest resistance values are realised with a Fe-deficiency for which it holds that $-0.15 \leqslant \delta \leqslant -0.05$).

The Zn-content is decisive for the magnetic permeability. If the Zn-content becomes lower than 0.45, the magnetic permeability drops below 300, is undesired. For most applications in the present range, Zn-contents of at least 0.50 which give rise to magnetic permeabilities of at least 350, are desired. Preferably, $z \geqslant 0.55$, as a result of which magnetic permeabilities exceeding 500 can be realised. The upper limit is the Zn-content is determined by the Curie temperature which is permissible.

The presence of a small but specific quantity of Mn in combination with a specific quantity (preferably 0.4 to 0.8% by weight) of $Bi_2O_3+V_2O_5$ as a sintering agent proves to be essential for low losses. Since at higher sintering temperatures or in a less oxidising medium Mn can become entirely bivalent, in the formula $-0.5\times \leqslant \varepsilon$. It has surprisingly been found that minimal power losses are realised when a combination of $Bi_2O_3$ and $V_2O_5$ is used as a sintering agent. When $V_2O_5$ alone is used as a sintering agent, the electric losses prove to be reduced. When $Bi_2O_3$ alone is used as a sintering agent, the power losses prove to be considerably higher. In a certain case even more than 100% higher. The overall power loss P of a magnet core is composed of the hysteresis loss $P_h$ and the eddy current loss $P_e$: $P=P_e+P_h$. The overall power loss can be defined as $P=V_L I \cos \theta$, wherein $V_L$ is the voltage between the ends of a coil which is provided on the core, I is the current through the coil and $\theta$ is the phase angle between V and I. If $\theta=90°$, the loss is zero. The material of the core then is free from lossess. When the material is not free from losses, the loss can be measured by measuring the product of V and I during one cycle.

Example:

Starting material for the manufacture of magnet cores according to the invention were weighed in the following quantities

367.5 g of $Fe_2O_3$
9.5 g of $Mn\ CO_3$
106.3 g of $Zn\ O$
16.7 g of $Li_2\ CO_3$

and ground in a ball mill containing 1 litre of water for 6 hours, the ball mill having a capacity of 2 litres. The powder-water mixture was then kept at a temperature of 110°C for 16 hours in order to dry it. The resulting material was crushed and then prefired in a chamberkiln at 700°C for 2 hours. 3.0 g of $Bi_2O_3$ and 1 g of $V_2O_5$ were added and the mixture was ground in a ball mill with 1 litre of water for 6 hours, the capacity of the ball mill being 1 litre. The resulting mixture was then dried at 110°C for 16 hours and crushed. It was then gradulated by means of a binder. Rings were compressed from the granulate having an outside diameter of 14 mm, an inside diameter of 9 mm and a height of 4 mm (pressure 0.5 tons/$cm^2$). The properties of the sintered rings which has a composition which satisfied the formula:

$$Li_{0.205}Zn_{0.59}Mn_{0.035}Fe_{2.07}O_{3.85}+0.6 \text{ wt.\% } Bi_2O_3+0.2 \text{ wt.\% } V_2O_5$$

were:

specific density $d$=4.92 g/$cm^3$
magnetic permeability $\mu$=760
specific electric resistance $\rho=1.5\times10^6\Omega m$
Curie temperature $T_c$=166°C.

The power losses of the annular cores provided with a winding were measured at four different frequencies (16, 64, 128 and 256 kHz), the driving of the coils being such that the induction B was 100 mT. The temperature of the cores was kept at 25°C. Result:

| Frequency | Power losses |
|---|---|
| 16 kHz | 86 mW/$cm^3$ (87) |
| 64 kHz | 405 mW/$cm^3$ (422) |
| 128 kHz | 993 mW/$cm^3$ (1184) |
| 256 kHz | 2390 mW/$cm^3$ (3043) |

After the measured values are stated in brackets the value of the losses which were measured at cores which were provided with a winding and which (not counting the fact that they comprised no $V_2O_5$) were quite identical. The influence of the addition of $V_2O_5$ to the $Bi_2O_3$ sintering agent is significant.

A second series of rings was manufactured having the same composition as in the preceding example. The process steps were identical to those of the example, except for the fact that sintering was carried out in oxygen at a (peak) temperature of 1225°C. The properties of this series of rings were compared with those of rings manufactured under the same conditions and comprising 0.6% by weight of $Bi_2O_3$; 0.2% by weight of $V_2O_5$ and no addition at all, respectively, instead of 0.6% by weight of $Bi_2O_3$+0.2% by weight of $V_2O_5$. The result is summarized in the Table below.

TABLE

| Addition (wt.%) | 0.6 $Bi_2O_3$+0.2 $V_2O_5$ | 0.6 $Bi_2O_3$ | 0.2 $V_2O_5$ | — |
|---|---|---|---|---|
| $\mu$ | 850 | 725 | 760 | 500 |
| d (g/$cm^3$) | 4.91 | 4.87 | 4.85 | 4.74 |
| $\rho$ ($10^6\Omega m$) | 6.0 | 14 | $1.10^{-4}$ | 4.2 |
| $T_c$ (°C) | 185 | 196 | 190 | 204 |
| $P_w$ (mW/$cm^3$) at | | | | |
| 16 kHz | 86 | 100 | 84 | 120 |
| 64 kHz | 432 | 527 | 450 | 660 |
| 128 kHz | 1010 | 1260 | 1060 | 1480 |

In the Table power losses are indicated by $P_w$.

**Claims**

1. A magnet core of oxidic, ferromagnetic material consisting of a spinel ferrite having a cubic crystal structure, characterized in that the ferrite has the following composition:

$$(Li_{0.5}\ Fe_{0.5})_{1-z-y}Zn_z\ Mn_y^{II}\ Mn_x^{III}\ Fe_{2-x+\delta}O_{4+3/2\delta+\varepsilon}$$

with

$0.45 \leq z \leq 0.62$
$0.01 \leq x+y \leq 0.20$
$-0.35 \leq \delta \leq +0.05$
$-0.5x \leq \varepsilon$

to which has been added as a sintering agent.

p% by weight of $Bi_2O_3$+q% by weight of $V_2O_5$ wherein
$0.1 \leq p \leq 1.0$
$0.1 \leq q \leq 1.0$
$p+q \leq 1.2$

2. A magnet core as claimed in Claim 1, characterized in that $0.4 \leq p+q \leq 0.8$.

3. A magnet core as claimed in Claim 1, characterized in that $-0.15 \leq \delta \leq -0.05$.

**Patentansprüche**

1. Magnetkern aus oxidischem Ferromagnetmaterial aus einem Spinellferrit mit kubischer Kristallstruktur, dadurch gekennzeichnet, dass der Ferrit folgende Zusammensetzung hat:

$$(Li_{0,5}Fe_{0,5})_{1-z-y}Zn_zMn_y^{II}Mn_x^{III}Fe_{2-x+\delta}O_{4+3/2\delta+\varepsilon}$$

mit

$0.45 \leq z \leq 0.62$
$0.01 \leq x+y \leq 0.20$
$-0.35 \leq \delta \leq +0.05$
$-0.5x \leq \varepsilon$

dem zugesetzt ist

P Gew.% $Bi_2O_3$+q Gew.-% $V_2O_5$, wobei
$0{,}1 \leq p \leq 1{,}0$
$0{,}1 \leq q \leq 1{,}0$
$p+q \leq 1{,}2$

2. Magnetkern nach Anspruch 1, dadurch gekennzeichnet, dass $0{,}4 \leq p+q \leq 0{,}8$ ist.

3. Magnetkern nach Anspruch 1, dadurch gekennzeichnet, dass $-0{,}15 \leq \delta \leq -0{,}05$ ist.

**Revendications**

1. Noyau magnétique en matériau d'oxyde ferromagnétique constitué par un ferrite de spinelle présentant une structure cristalline cubique, caractérisé en ce que le ferrite a la composition suivante:

$$(Li_{0,5}Fe_{0,5})_{1-z-y}Zn_zMn_y^{II}Mn_x^{III}Fe_{2-x+\delta}O_{4+3/2\delta+\varepsilon}$$

avec

$0{,}45 \leq z \leq 0{,}62$
$0{,}01 \leq x+y \leq 0{,}20$
$-0{,}35 \leq \delta \leq +0{,}05$
$-0{,}5x \leq \varepsilon$

additionnée d'un agent de frittage:

p% en poids de $Bi_2O_3$+q en poids de $V_2O_5$ le tout de façon que
$0{,}1 \leq p \leq 1{,}0$
$0{,}1 \leq q \leq 1{,}0$
$p+q \leq 1{,}2$

2. Noyau magnétique selon la revendication 1, caractérisé en ce que $0{,}4 \leq p+q \leq 0{,}8$.

3. Noyau magnétique selon la revendication 1, caractérisé en ce que $-0{,}15 \leq \delta \leq -0{,}05$.